# EUROPEAN PATENT SPECIFICATION

(11) **EP 1 647 737 B1**
(45) Date of publication and mention of the grant of the patent: **13.01.2010**
(21) Application number: 04425778.0
(22) Date of filing: 15.10.2004
(51) Int. Cl.: F16H 7/08

(54) **Hydraulic tensioner, equipped with a no-return device, comprising anti-rotation means capable of being disabled and method of disabling said anti-rotation means**
Hydraulische Spannvorrichtung mit Rückbewegungssperre und mit ausschaltbaren Anti-Drehbewegungsmitteln und Verfahren zum Ausschalten dieser Mittel
Tendeur hydraulique avec un dispositif de non-retour et à moyens d 'anti-rotation déconnectables et procédé de déconnecter ces moyens

(43) Date of publication of application: 19.04.2006
(73) Proprietor: Morse Tec Europe S.r.l., 20121 Milano (IT)
(72) Inventor: Maino, Bruno, 20053 Monza (Milano) (IT); Banfi, Stefano, 20060 Bussero (Milano) (IT); Redaelli, Daniele, 23807 Merate (Lecco) (IT)
(74) Representative: Coggi, Giorgio

(56) References cited:
- EP-A- 1 188 955
- US-A- 3 812 733
- PATENT ABSTRACTS OF JAPAN vol. 018, no. 196 (M-1589), 6 April 1994 (1994-04-06) & JP 06 002745 A (DAIDO KOGYO CO LTD), 11 January 1994 (1994-01-11)

## Description

The present invention refers to a hydraulic tensioner belonging to a timing system for an engine, in particular for an internal combustion engine, in which the hydraulic timing chain tensioner can be integrated with guide means for said chain.

In particular, the present invention refers to a hydraulic tensioner equipped with anti-rotation means capable of being disabled.

A timing system for an internal combustion engine can be controlled by means of a chain transmission, in which the chain is wound on two or more sprockets, one of which is a drive sprocket and takes its drive (even indirectly) from the drive shaft to transmit it to one or more driven shafts.

Since for reasons of adjustment, of wear on materials and/or of taking-up of play it is often necessary to compensate for a certain slack on the chain, it is known to the art to use shoe tensioning devices, in which a shoe is biased with an adjustable force against a branch of the chain.

Various means for biasing the tensioning shoe against the chain are known.

The most frequently used means are the hydraulic tensioners, wherein a fixed member (generally a cylinder) is mounted on the engine block and a movable member (generally a piston, mobile inside the cylinder) is slidable with respect to the fixed member and acts against the shoe placed in contact with the chain to tension it. In these tensioning devices, the piston is pushed out of the cylinder, towards the shoe disposed against a branch of the chain, by the combined action of a spring and of a pressurized fluid (generally oil) fed into the cylinder chamber through a check valve.

Any slackening of the chain due to the heating, to the wear and to the time is compensated by the piston extending out of the cylinder under the action of said biasing means.

When the pressurized fluid to be fed into the cylinder chamber (for example because the engine is stopped or because it has only just been started) is not available, the piston - urged by the tension of the chain - can (or could) return partially into the cylinder, allowing the chain to slacken and do not transmit the motion correctly from the drive sprocket to the driven sprockets, compromising the efficiency and the reliability of the timing system and putting (or being able to put) the engine "out of phase": an arrangement known to the art - for example from European patent No. 1,188,955 in the name of the Applicant - for overcoming said drawback is to couple to the cylinder a pawl which, interacting with a rack coupled to the piston, prevents the piston from returning into the cylinder when pressurised fluid is not available.

To increase the reliability of a "rack and pawl" no-return device and to prevent the piston from being able to rotate accidentally with respect to the cylinder - thus disengaging the rack from the pawl - anti-rotation means are usually provided consisting, for example, of a closed longitudinal slot, formed on the outside wall of the piston along a generatrix of said piston, in which a pin, integral with the cylinder and slidable in the longitudinal slot of the cylinder, engages.

Said anti-rotation means further prevent the piston from accidentally slipping out of the cylinder but, when a tensioner is removed from an engine, they do not allow, without involving actions which are (normally) long and expensive, the piston to be returned into the cylinder, for example to facilitate the transport and the storage of the tensioner and/or to re-use the tensioner for another engine without involving actions which are normally long and expensive.

US 3,812,733, which constitutes the closest prior art, discloses a tensioning device for flexible members comprising detent means capable of selectively taking two portions in one of which a sliding member is prevented from advancing and in the other of which the sliding member is prevented from retracting.

Object of the present invention is to overcome said drawbacks by providing a hydraulic tensioner whose piston can be made to return easily into the cylinder by an operator by rotating the piston around its longitudinal axis to disengage the rack from the pawl.

This object is achieved by a hydraulic tensioner realised according the invention, which has the characteristics of appended independent claim 1 or 2; further characteristics of the invention are apparent from the dependent claims.

A hydraulic tensioner, provided with no-return means and anti-rotation means which can be disabled to disengage the piston of the hydraulic tensioner from the no-return device, forms the subject matter of the invention.

A method of disabling the anti-rotation means also forms the subject matter of the present invention.

Further characteristics of the invention will be made clearer by the detailed description that follows, referring to a purely exemplifying and therefore non-limiting embodiment thereof, illustrated in the appended drawings in which:
- Figure 1 shows a perspective view of a first embodiment of a piston for a hydraulic tensioner made according to the invention;
- Figure 2 shows a diagrammatic sectional view of a hydraulic tensioner of the prior art provided with the piston of Figure 1;
- Figure 3 shows a diagrammatic sectional view of the hydraulic tensioner of Figure 2 with the piston completely extracted from the cylinder;
- Figure 4 shows a diagrammatic sectional view of the hydraulic tensioner of Figure 2, with the piston completely extracted from the cylinder and rotated to disengage the rack from the pawl;
- Figure 5 shows a diagrammatic sectional view of the hydraulic tensioner of Figure 2 with the piston completely returned into the cylinder;
- Figure 6 shows a side view of the hydraulic tensioner of Figure 5;
- Figure 7 is a perspective view of a second embodiment of a piston for a hydraulic tensioner realised according to the invention;
- Figure 8 shows a diagrammatic sectional view of a hydraulic tensioner of the prior art, equipped with the piston of Figure 7 completely extracted from the cylinder;
- Figure 9 shows a diagrammatic sectional view of the hydraulic tensioner of Figure 8 with the piston completely extracted from the cylinder and rotated to disengage the rack from the pawl;
- Figure 10 shows a side view of the hydraulic tensioner of Figure 8 with the piston completely returned into the cylinder.

In the appended figures, corresponding elements are identified by means of the same reference numerals.

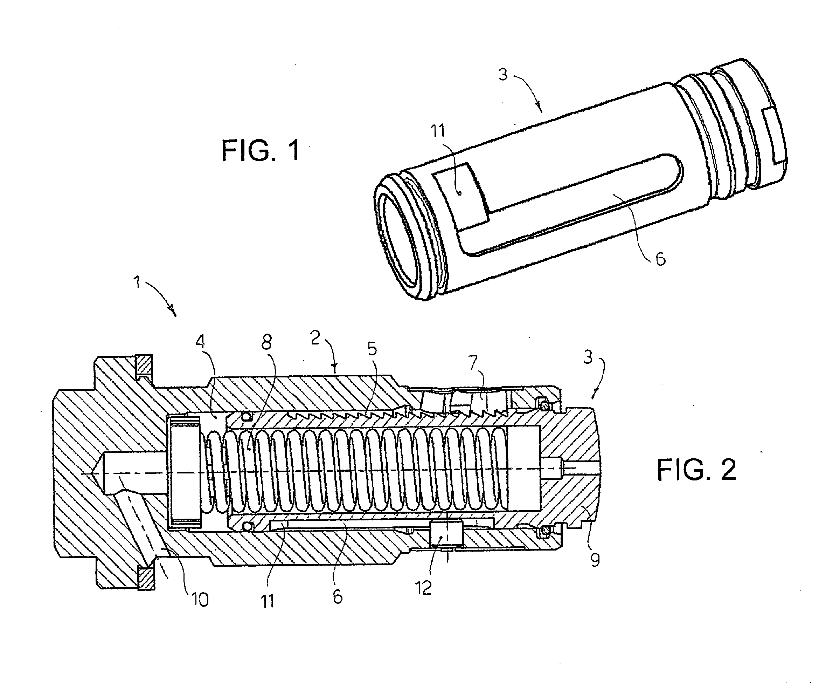

Figure 1 is a perspective view of a first embodiment of a piston 3 for a hydraulic tensioner, realised according to the invention, wherein the slot in which the pin 12 (Figure 2) slides is L-shaped and comprises the longitudinal slot 6 and a further slot 11 (connected to the longitudinal slot 6 to which it is at right angles and, preferably, shaped as a ramp to join the bottom of the longitudinal slot 6 to the outer surface of the piston 3) situated at the end of the longitudinal slot 6 nearer the bottom of the cylinder 2 (Figure 2).

Figure 2 is a diagrammatic sectional view of a hydraulic tensioner 1 (of a type known to the art, for example, from European Patent No. 1,188,955 in the name of the applicant), equipped with a piston 3 according to the invention.

The hydraulic tensioner 1, of a known type, comprises a cylinder 2 and the piston 3 housed slidably in a cylindrical chamber 4 of the cylinder 2; the piston 3 bears the rack 5 which interacts with the pawl 7 carried by the cylinder 2.

The pawl 5 and the rack 7 form the no return means.

The piston 3 is hollow on the inside and houses a pushing spring 8 acting between the head end 9 of the piston 3 and the bottom of the cylindrical chamber 4, which is in communication with a circuit for supplying a pressurised fluid (generally oil) through an aperture 10 and a no-return valve, not described because it is per se known and in any case outside the scope of the present invention.

The combined action of the spring 8 and of the pressurised fluid in the chamber 4 tends to bias the piston 3 out of the cylinder 2, so that the piston 3 comes to bear with its head end 9 against a shoe (omitted in the figure for the sake of simplicity of the graphic representation) and thus keep the chain taught.

Also visible in Figure 2 are the pin 12 engaged in the longitudinal slot 6 and the further slot 11.

For the sake of simplicity of the graphic representation, in the following figures only the cylinder 2, the piston 3, the rack 5, the longitudinal slot 6, the pawl 7 and the pin 12 will be indicated by reference numerals.

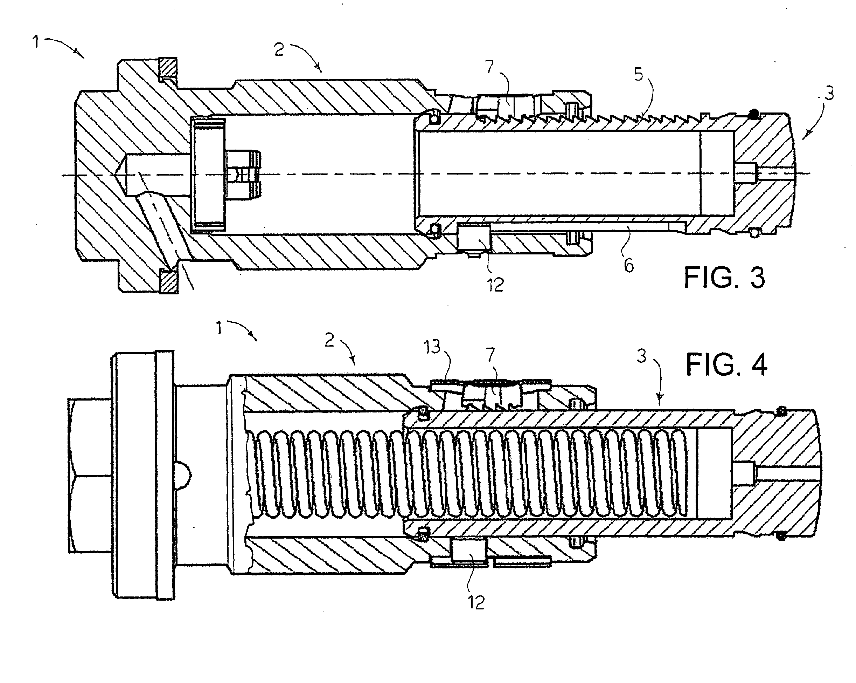

Figure 3 is a diagrammatic sectional view of the hydraulic tensioner 1, with the piston 3 completely extracted from the cylinder 2: said condition is easily obtained when the tensioner 1 is not connected to the engine and the piston 3 spontaneously protrudes from the cylinder 2 under the effect, for example, of the spring 8 (Figure 2) and/or of its own weight.

In Figure 3 the pawl 7 is engaged with the final portion of the rack 5 and the pin 12, engaged with one end of the longitudinal slot 6, prevents the piston 3 from slipping out of the cylinder 2.

Figure 4 is a diagrammatic sectional view of the hydraulic tensioner 1 of Figure 3, in which the anti-rotation means (6, 12) have been disabled by rotating the piston 3 around its longitudinal axis to insert the pin 12 in the further slot 11, preferably shaped as a ramp (Figure 1), to disengage the rack 5 from the pawl 7.

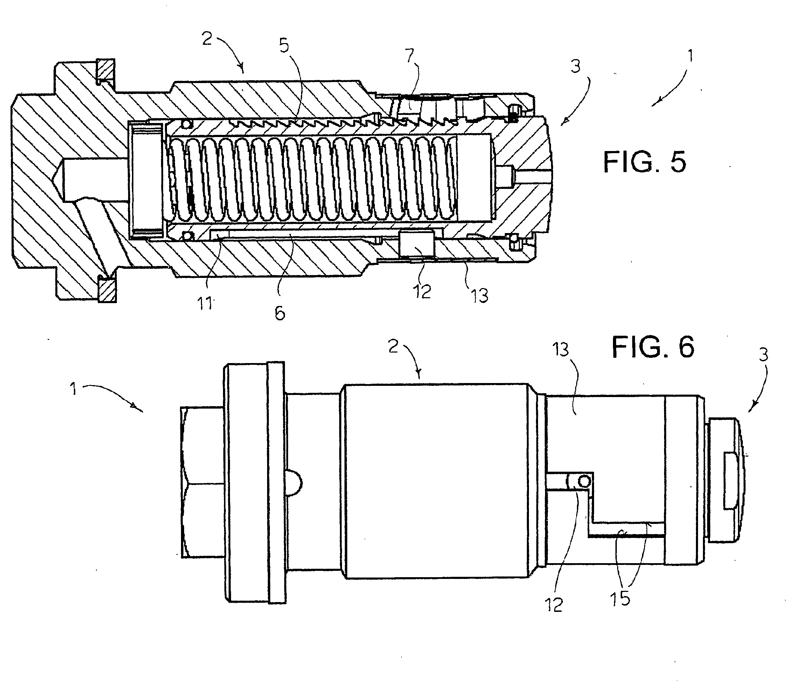

From Figure 4 it can be seen that the pin 12 is held in place by a flexible foil 13 (seen better in Figure 6) applied to the outer surface of the cylinder 2 and that the pin 12, having come out of the longitudinal slot 6, has moved into contact with the outer surface of the piston 3.

Figure 5 is a diagrammatic sectional view of the hydraulic tensioner 1 with the piston 3 completely retracted inside the cylinder 2 and locked therein by rotating the piston 3 to engage the pawl 7 with the rack 5; the pin 12 is engaged with the other end of the longitudinal slot 6 and the further cavity 11 is visible.

This configuration is advantageous for the transport and the storage of the hydraulic tensioner 1.

Figure 6 shows a side view of the hydraulic tensioner 1 of Figure 5; in figure 6 the cylinder 2, the piston 3 completely inserted in the cylinder 2 and the flexible foil 13, which holds the pin 12 in place can be seen.

In the preferred embodiment shown in Figure 6, the flexible foil 13 has two opposite flaps 15, which are L-shaped and are at least partially overlapping; in Figure 6 the flaps 15 are slightly parted and allow the pin 12 beneath to be seen.

The method for disabling the above mentioned anti-rotation means (6, 12) comprises the steps of extracting the piston 3 from the cylinder 2 to bring the pin 12 to one end of the longitudinal slot 6 level with the further slot 11 (Figure 3) and rotating (for example in a clockwise direction) the piston 3 with respect to the cylinder 2 to bring the pin 12 into the further slot 11, thus disengaging the pawl 7 from the rack 5 (Figure 4).

At this point the piston 3 can be made to return inside the cylinder 2 and fixed there by rotating the piston 3 in the opposite direction, for example counter-clockwise (Figures 5 and 6).

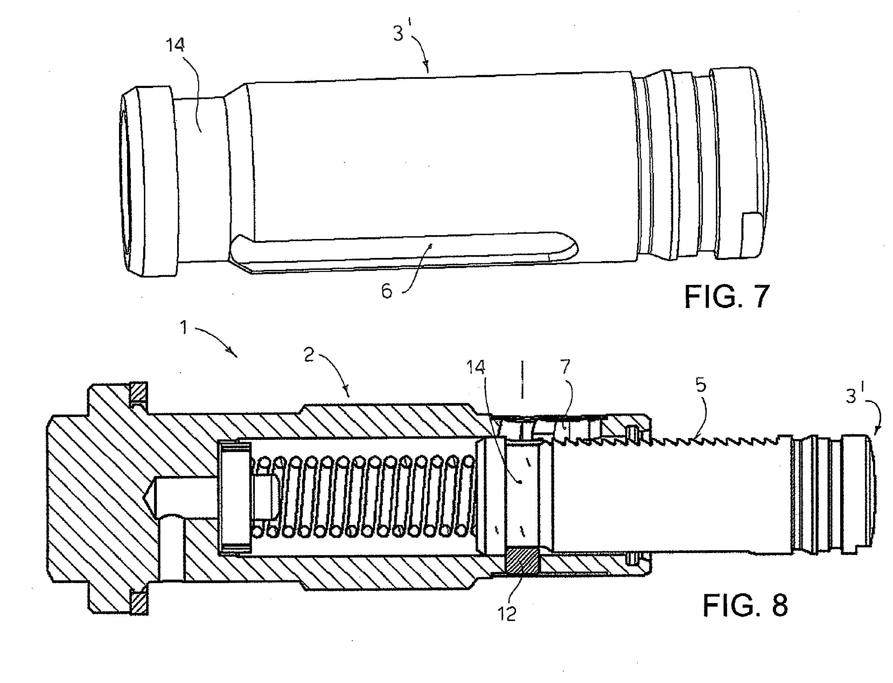

Figure 7 shows a perspective view of a second embodiment of a piston 3' for a hydraulic tensioner made according to the invention, which differs from that illustrated in Figure 1 essentially in that the slot 6 is not L-shaped but ends in a throat 14, perpendicular to the longitudinal slot 6, which extends for the entire circumference of the piston 3'.

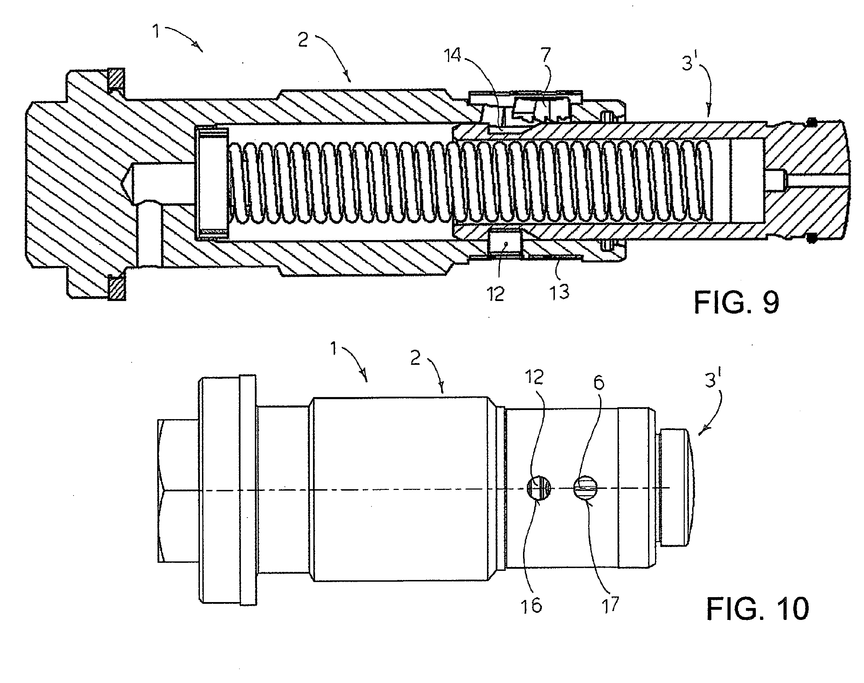

The method for disabling the anti-rotation means (6, 12) does not differ from that described previously with reference to Figures 1-4 and is described summarily by Figure 8 (which is a diagrammatical sectional view of the hydraulic tensioner 1 with the piston 3' completely extracted from the cylinder 2, the pin 12 in the throat 14 and the rack 5 engaged with the pawl 7) and by Figure 9, which shows diagrammatically, in cross section, the hydraulic tensioner 1 with the piston 3' completely extracted from the cylinder 2, the pin 12 in the throat 14 and the piston 3' rotated to disengage the rack 5 from the pawl 7.

Figure 10 shows a side view of the hydraulic tensioner 1 with the piston 3' completely retracted into the cylinder 2.

In figure 10 the hole 16 (occupied by the pin 12) and the hole 17, which shows an area of the longitudinal slot 6 beneath, are formed in the sleeve of the cylinder 2.

## Claims

1. A hydraulic tensioner (1) equipped with a no-return device (5, 7) and with anti-rotation means (6, 12, **14), wherein** the anti-rotation means (6, 12, **14**) are capable of being disabled to disengage the piston (3') of the hydraulic tensioner (1) from the no-return device (5, 7) **characterised in that** the anti-rotation means (6, 12, 14) comprise a pin (12), integral with the cylinder (2) of the tensioner (1), which engages in a longitudinal slot (6) formed on the outer wall of the piston (3) and in a throat (14), perpendicular to the longitudinal slot (6), which extends for the entire circumference of the piston (3'), the longitudinal slot (6) ending in the throat (14).

2. A hydraulic tensioner (1) equipped with a no-return device (5, 7) and with anti-rotation means (6, 11, 12), wherein the anti-rotation means (6, 11, 12) are capable of being disabled to disengage the piston (3) of the hydraulic tensioner (1) from the no-return device (5, 7), **characterised in that** the anti-rotation means (6, 11, 12) capable of being disabled comprise a pin (12), integral with the cylinder (2) of the tensioner (1), which engages in a longitudinal slot (6) formed on the outer wall of the piston (3) and in a further slot (11), at right angles with respect to the longitudinal slot (6) to which it is connected, formed at the end of the longitudinal slot (6) nearer to the bottom of the cylinder (2).

3. A hydraulic tensioner (1) as in claim 2, **characterised in that** the further slot (11) is shaped as a ramp to join the bottom of the longitudinal slot (6) with the outer surface of the piston (3).

4. A hydraulic tensioner (1) as in claim 2 **characterised in that** the pin (12) is held in place by a flexible foil (13) applied to the outer surface of the cylinder (2).

5. A hydraulic tensioner (1) as in claim 4, **characterised in that** the flexible foil (13) has two opposite flaps (15), which are L-shaped and are at least partially overlapping.

6. A method for disabling the anti-rotation means (6, 11, 12, 14) capable of being disabled of a hydraulic tensioner (1) according to at least one of the previous claims, **characterised in that** it comprises at least the functional steps of:
- extracting the piston (3) from the cylinder (2) until the pin (12) is brought to one end of the longitudinal slot (6) level with the disabling means (11, 14); and
- rotating the piston (3) with respect to the cylinder (2) to bring the pin (12) into the disabling means (11, 14) to disengage the piston (3, 3') of the hydraulic tensioner (1) from the no-return device (5, 7).

## Patentansprüche

1. Hydraulische Spannvorrichtung (1), die mit einer Rückbewegungssperre (5, 7) und mit Anti-Drehbewegungsmitteln (6, 12, 14) versehen ist, wobei die Anti-Drehbewegungsmittel (6, 12, 14) ausgeschaltet werden können, um den Kolben (3') der hydraulischen Spannvorrichtung (1) aus der Rückbewegungssperre (5, 7) auszurücken, **dadurch gekennzeichnet, dass** die Anti-Drehbewegungsmittel (6, 12, 14) einen integral mit dem Zylinder (2) der Spannvorrichtung (1) ausgebildeten Stift (12) umfassen, der in einen Längsschlitz (6), der in der Außenwand des Kolbens (3) ausgebildet ist, und in eine senkrecht zu dem Längsschlitz (6) ausgebildete Kehle (14) eingreift, die sich um den gesamten Umfang des Kolbens (3') erstreckt, wobei der Längsschlitz (6) in der Kehle (14) endet.

2. Hydraulische Spannvorrichtung (1), die mit einer Rückbewegungssperre (5, 7) und mit Anti-Drehbewegungsmitteln (6, 11, 12) versehen ist, wobei die Anti-Drehbewegungsmittel (6, 11, 12) ausgeschaltet werden können, um den Kolben (3) der hydraulischen Spannvorrichtung (1) aus der Rückbewegungssperre (5, 7) auszurücken, **dadurch gekennzeichnet, dass** die ausschaltbaren Anti-Drehbewegungsmittel (6, 11, 12) einen integral mit dem Zylinder (2) der Spannvorrichtung (1) ausgebildeten Stift (12) umfassen, der in einen Längsschlitz (6), der in der Außenwand des Kolbens (3) ausgebildet ist, und in einen weiteren Schlitz (11), der im rechten Winkel zu dem Längsschlitz (6), mit dem er verbunden ist, verläuft und der an dem Ende des Längsschlitzes (6), das sich näher am Boden des Zylinders (2) befindet, ausgebildet ist, eingreift.

3. Hydraulische Spannvorrichtung (1) nach Anspruch 2, **dadurch gekennzeichnet, dass** der weitere Schlitz (11) als eine Rampe geformt ist, um den Grund des Längsschlitzes (6) mit der Außenfläche des Kolbens (3) zu verbinden.

4. Hydraulische Spannvorrichtung (1) nach Anspruch 2, **dadurch gekennzeichnet, dass** der Stift (12) durch eine flexible Folie (13), die an der Außenfläche des Zylinders (2) angebracht ist, in Position gehalten wird.

5. Hydraulische Spannvorrichtung (1) nach Anspruch 4, **dadurch gekennzeichnet, dass** die flexible Folie (13) zwei einander gegenüberliegende Klappen (15) aufweist, die L-förmig sind und sich zumindest teilweise überlappen.

6. Verfahren zum Ausschalten der ausschaltbaren Anti-Drehbewegungsmittel (6, 11, 12, 14) einer hydraulischen Spannvorrichtung (1) nach mindestens einem der vorhergehenden Ansprüche, **dadurch gekennzeichnet, dass** es mindestens die folgenden funktionalen Schritte umfasst:
- Herausziehen des Kolbens (3) aus dem Zylinder (2), bis der Stift (12) zu einem Ende des Längsschlitzes (6) auf gleiche Höhe mit dem Ausschaltmittel (11, 14) gebracht worden ist; und
- Drehen des Kolbens (3) bezüglich des Zylinders (2), um den Stift (12) in das Ausschaltmittel (11, 14) zu bringen, um den Kolben (3, 3') der hydraulischen Spannvorrichtung (1) aus der Rückbewegungssperre (5, 7) auszurücken.

## Revendications

1. Tendeur hydraulique (1) équipé d'un dispositif de non-retour (5, 7) et de moyens de blocage anti-rotation (6, 12, 14), lesdits moyens de blocage anti-rotation (6, 12, 14) pouvant être désactivés de manière à désengager le piston (3') de tendeur hydraulique (1) du dispositif de non-retour (5, 7), **caractérisé en ce que** les moyens de blocage anti-rotation (6, 12, 14) comprennent un axe (12), intégral au cylindre (2) du tendeur (1), qui s'engage dans une encoche longitudinale (6) formée sur la paroi extérieure du piston (3) et dans une gorge (14), perpendiculaire à l'encoche longitudinale (6), qui s'étend sur toute la circonférence du piston (3'), l'encoche longitudinale (6) se terminant dans la gorge (14).

2. Tendeur hydraulique (1) équipé d'un dispositif de non-retour (5, 7) et de moyens de blocage anti-rotation (6, 11, 12), lesdits moyens de blocage anti-rotation (6, 11, 12) pouvant être désactivés de manière à désengager le piston (3) de tendeur hydraulique (1) du dispositif de non-retour (5, 7), **caractérisé en ce que** les moyens de blocage anti-rotation (6, 11, 12) pouvant être désactivés comprennent un axe (12), intégral au cylindre (2) du tendeur (1), qui s'engage dans une encoche longitudinale (6) formée sur la paroi extérieure du piston (3) et dans une autre encoche (11), à angle droit par rapport à l'encoche longitudinale (6), à laquelle elle est reliée, formée à l'extrémité de l'encoche longitudinale (6) plus près du fond du cylindre (2).

3. Tendeur hydraulique (1) selon la revendication 2, **caractérisé en ce que** l'autre encoche (11) est en forme de rampe de manière à connecter le fond de l'encoche longitudinale (6) avec la surface extérieure du piston (3).

4. Tendeur hydraulique (1) selon la revendication 2, **caractérisé en ce que** l'axe (12) est retenu en place par une lame flexible (13) appliquée à la surface extérieure du cylindre (2).

5. Tendeur hydraulique (1) selon la revendication 4, **caractérisé en ce que** la lame flexible (13) a deux rabats opposés (15), qui sont en forme de L et qui se chevauchent au moins en partie.

6. Procédé utile pour désactiver les moyens de blocage anti-rotation (6, 11, 12, 14), pouvant être désactivés, d'un tendeur hydraulique (1), selon au moins l'une des revendications précédentes, **caractérisé en ce que** ledit procédé comprend au moins les étapes consistant à :
- faire sortir le piston (3) du cylindre (2) jusqu'à ce que l'axe (12) soit déplacé à une extrémité de l'encoche longitudinale (6) de manière à être au niveau avec le moyen de désactivation (11, 14) ; et
- faire tourner le piston (3) par rapport au cylindre (2) pour introduire l'axe (12) dans le moyen de désactivation (11, 14) de manière à désengager le piston (3, 3') de tendeur hydraulique (1) du dispositif de non-retour (5, 7).
